# EUROPÄISCHE PATENTSCHRIFT

(11) **EP 2 550 172 B1**
(45) Veröffentlichungstag und Bekanntmachung des Hinweises auf die Patenterteilung: **14.06.2017**
(21) Anmeldenummer: 11708987.0
(22) Anmeldetag: 25.02.2011
(51) Int. Cl.: B60K 17/02, F16D 13/56, F16H 35/10

(54) **FAHRZEUG, INSBESONDERE MOTORRAD, MIT EINER DREHMOMENTBEGRENZENDEN EINRICHTUNG**
VEHICLE, IN PARTICULAR MOTORCYCLE, HAVING A TORQUE LIMITING DEVICE
VÉHICULE, EN PARTICULIER MOTOCYCLE, COMPORTANT UN DISPOSITIF DE LIMITATION DU COUPLE

(30) Priorität: 24.03.2010 DE 102010012627
(43) Veröffentlichungstag der Anmeldung: 30.01.2013
(73) Patentinhaber: Bayerische Motoren Werke Aktiengesellschaft, 80809 München (DE)
(72) Erfinder: THEOBALD, Markus, 85764 Unterschleissheim (DE)
(86) Internationale Anmeldenummer: PCT/EP2011/000936
(87) Internationale Veröffentlichungsnummer: WO 2011/116863

(56) Entgegenhaltungen:
- EP-A1- 0 854 304
- DE-A1-102007 053 517
- DE-A1-102008 042 029

## Beschreibung

Die vorliegende Erfindung betrifft ein Fahrzeug, insbesondere ein Motorrad gemäß dem Oberbegriff des Patentanspruches 1.

Ein derartiges Fahrzeug ist aus der DE 10 2008 042 029 A1 bekannt. Zum technischen Hintergrund der vorliegenden Erfindung zählen ferner die DE 10 2007 053 517 A1 sowie die EP 854 304 A1.

Beim Befahren von Fahrbahnen mit stark wechselnden Haftbedingungen können im Antriebsstrang von Fahrzeugen starke Drehmomentspitzen auftreten. Wenn die Antriebsräder auf rutschigem Untergrund durchdrehen und anschließend schlagartig wieder "greifen", können im Antriebsstrang "Drehmomentüberhöhungen" auftreten, die ein Vielfaches des vom Motor erzeugbaren maximalen Drehmoments betragen können. Dieses Problem kann prinzipiell bei allen Arten von Straßen- und Geländefahrzeugen auftreten. Insbesondere bei Geländemotorrädern, mit denen auch Sprünge durchgeführt werden, besteht die Gefahr, dass derartige Drehmomentspitzen zu Überbeanspruchungen einzelner Antriebskomponenten führen.

Um dies zu vermeiden, ist bei der DE 10 2007 053 517 A1 im Drehmomentpfad zwischen der Kupplung und einem Getriebeausgang eine "drehmomentbegrenzende Einrichtung" angeordnet. Die dort beschriebene Drehmomentbegrenzungseinrichtung wirkt gleichermaßen sowohl in Antriebsrichtung wie auch in "Schubrichtung", d.h. in umgekehrter Antriebsrichtung.

Motorräder mit Viertaktmotoren zeichnen sich im Schubbetrieb durch ein hohes Motorbremsmoment aus. Für einen ungeübten Fahrer kann dadurch beim "Gas wegnehmen" die Fahrsicherheit erheblich beeinträchtigt werden, insbesondere dann, wenn er die Kupplung unbetätigt lässt und das gesamte Motorbremsmoment verzögernd auf das Hinterrad wirkt.

Zur Verringerung dieses Risikos wurden sogenannte "Anti-Hopping-Kupplungen" entwickelt, die das vom Motor ausgeübte Bremsmoment begrenzen. Derartige Anti-Hopping-Kupplungen sind zumeist in die vom Fahrer zu betätigende Schaltkupplung, welche üblicherweise auf der Getriebeeingangswelle bzw. koaxial dazu angeordnet ist, integriert.

Die aus dem Stand der Technik bekannten Vorrichtungen zur Reduzierung des Motorbremsmoments sind üblicherweise im Inneren der Schaltkupplung, häufig konzentrisch zwischen einem Reibbelag und einer Kupplungswelle angeordnet, wodurch sich zwangsläufig die Ölbeaufschlagung der Reibbeläge der Kupplung verringert, was sich wiederum ungünstig auf deren thermische Stabilität auswirkt.

Wenn eine derartige "drehmomentbegrenzende Einrichtung" im Schubbetrieb, d.h. bei "bremsendem Motor" eingreift und der Fahrer zeitgleich die Schaltkupplung betätigt, so überlagern sich beide Systeme, was zu einer ungünstigen gegenseitigen Beeinflussung führen kann und sich durch Pulsieren des Kupplungshebels, Ruckeln des Fahrzeugs etc. äußern kann.

Aufgabe der Erfindung ist es, ein Fahrzeug, insbesondere ein Motorrad, mit einer weiterentwickelten, drehmomentbegrenzenden Einrichtung zu schaffen, die einerseits zuverlässig die Antriebsstrangkomponenten vor Überbelastungen schützt und die andererseits ein günstiges Betriebsverhalten aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug, insbesondere ein Motorrad, mit einem Motor und einer Kurbelwelle, die über eine Kupplung mit einem Getriebe gekoppelt ist, wobei im Drehmomentpfad zwischen der Kupplung und einem Ausgang des Getriebes eine drehmomentbegrenzende Einrichtung angeordnet ist.

Der Kern der Erfindung besteht darin, dass die drehmomentbegrenzende Einrichtung in den beiden möglichen Drehmomentübertragungsrichtungen ("Normalbetrieb" bzw. "Vortrieb Erzeugen" sowie "Schubbetrieb") unterschiedlich wirkt. Die drehmomentbegrenzende Einrichtung kann derart konzipiert sein, dass das im Schubbetrieb das vom Antriebsrad bzw. vom Getriebe auf den Motor maximal übertragbare Schubmoment kleiner als das im Normalbetrieb vom Motor auf das Getriebe maximal übertragbare Antriebsmoment ist.

Vorzugsweise ist die drehmomentbegrenzende Einrichtung rein mechanisch ausgebildet. Elektrische Sensoren, Aktuatoren oder dergleichen sind somit nicht unbedingt erforderlich.

Die Erfindung ist insbesondere, wenn auch nicht ausschließlich für Antriebsstränge geeignet, bei denen die Kupplung auf bzw. koaxial zur Kurbelwelle angeordnet ist. Demgegenüber sind die eingangs erwähnten, aus dem Motorradbereich bekannten Anti-Hopping-Kupplungen für Antriebsstränge, bei denen die Kupplung auf bzw. koaxial zur Kurbelwelle angeordnet ist, nicht ohne weiteres geeignet.

Gemäß der Erfindung kann die Drehmomenteinrichtung auf einer zwischen der Kupplung und einer Getriebeeingangswelle angeordneten Zwischenwelle vorgesehen sein. Erfindungsgemäß weist die drehmomentübertragende Einrichtung ein erstes drehmomentübertragendes Element und ein zweites, damit drehkoppelbares bzw. drehgekoppeltes drehmomentübertragendes Element auf. Bei den beiden drehmomentübertragenden Elementen handelt es sich um zwei koaxial - z. B. auf einer Zwischenwelle zwischen der Kurbelwelle und einer Getriebeeingangswelle - angeordnete Zahnräder.

Gemäß der Erfindung sind die beiden drehmomentübertragenden Elemente über eine Reibkupplung, die durch eine Spanneinrichtung gespannt sein kann, miteinander drehkoppelbar bzw. drehgekoppelt. Die Spanneinrichtung kann eine Federeinrichtung aufweisen, welche dafür sorgt, dass die Reibkupplung stets mit einer gewissen Mindestvorspannung bzw. mit einer gewissen Mindestschließkraft geschlossen ist. Die Federeinrichtung kann z.B. durch eine Tellerfeder bzw. ein Tellerfederpaket oder durch eine Schraubenfeder oder eine Schraubenfederanordnung gebildet sein.

Darüber hinaus weist die Spanneinrichtung gemäß der Erfindung eine drehrichtungs- und/oder drehmomentabhängige Spannvorrichtung auf, die z.B. auf dem Prinzip einer Kugel-/Rampenanordnung bzw. auf mehreren Kugel-/Rampenanordnungen basieren kann. Der Grundgedanke dabei ist, dass bei einer Drehmomentübertragung in der einen Richtung die Schließkraft der Reibkupplung und somit das maximal übertragbare Drehmoment allein oder primär durch die von der Federeinrichtung ausgeübte Federkraft bestimmt ist, wohingegen bei einer Drehmomentübertragung in die umgekehrte Drehmomentrichtung der von der Federeinrichtung ausgeübten Schließkraft eine von der Spanneinrichtung erzeugte Schließkraft überlagert wird. Bei einer Drehmomentübertragung in dieser (umgekehrten Drehmomentrichtung) kommt es zu einer gewissen Relativverdrehung der beiden drehmomentübertragenden Elemente, was wiederum dazu führt, dass die drehrichtungs- und/oder drehmomentabhängige Spannvorrichtung eine (zusätzliche) Schließkraft auf die Reibkupplung ausübt.

Insofern besteht ein klarer Unterschied gegenüber der erfindungsgemäßen drehmomentbegrenzenden Einrichtung und einem Freilauf, der per definitionem in einer Drehrichtung überhaupt kein nennenswertes Drehmoment übertragen kann.

Im Folgenden wird die Erfindung im Zusammenhang mit der Zeichnung näher erläutert. Es zeigen:
- Figur 1: ein Motorradgetriebe mit einer auf einer Zwischenwelle zwischen der Kupplung und der Getriebeeingangswelle angeordneten Drehmoment begrenzenden Einrichtung gemäß der Erfindung;
- Figur 2: die drehmomentbegrenzende Einrichtung der Figur 1 in Schnittdarstellung; und
- Figur 3: die drehmomentbegrenzende Einrichtung der Figur 2 in Stirnansicht.

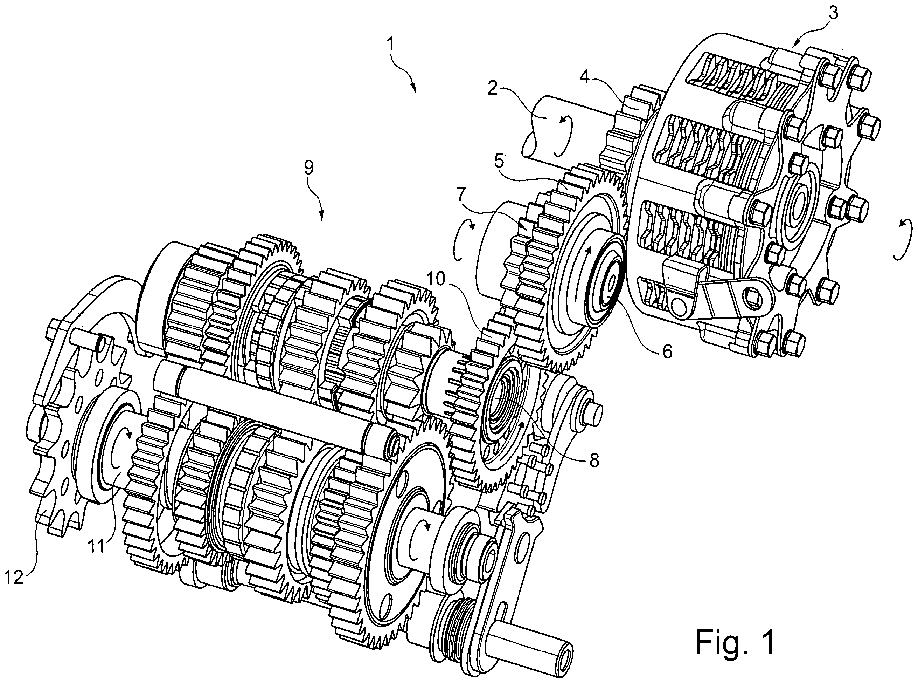

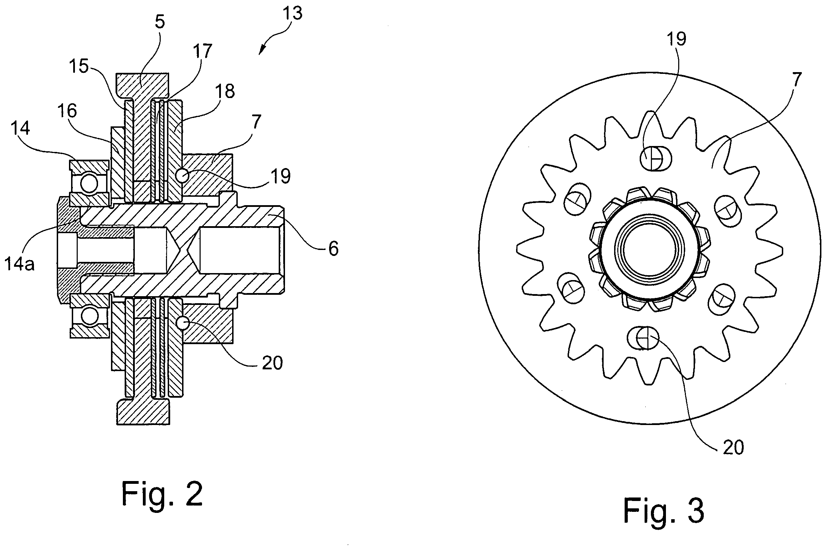

Figur 1 zeigt einen Teil einer Motor-/Getriebeeinheit eines hier nicht näher dargestellten Motorrads. Auf bzw. koaxial zu einer Kurbelwelle 2 eines hier nicht dargestellten Verbrennungsmotors des Motorrads ist eine Kupplung 3 angeordnet. Ein Abtrieb der Kupplung 3 ist drehfest mit einem Zahnrad 4 verbunden, das mit einem Zahnrad 5 kämmt, welches auf einer Zwischenwelle 6 angeordnet ist. Ebenfalls auf der Zwischenwelle 6 ist ein Zahnrad 7 angeordnet. Die beiden Zahnräder 5, 7 sind über eine später im Zusammenhang mit den Figuren 2, 3 noch näher zu erläuternde drehmomentbegrenzende Einrichtung miteinander drehgekoppelt.

Das Zahnrad 7 kämmt mit einem auf einer Getriebeeingangswelle 8 eines mehrgängigen Schaltgetriebes angeordneten Zahnrad 10. Das Schaltgetriebe 9 weist ferner eine Getriebeausgangswelle 11 mit einem darauf angeordneten Kettenritzel 12 auf.

Figur 2 zeigt die im Zusammenhang mit Figur 1 bereits erwähnte "drehmomentbegrenzende Einrichtung" 13, über welche die beiden auf der Zwischenwelle 6 angeordneten Zahnräder 5, 7 drehgekoppelt sind.

Die Zwischenwelle 6 ist über Lager, von denen hier lediglich ein Kugellager 14 dargestellt ist, in einem hier nicht näher dargestellten Motor-/Getriebegehäuse der Motor-/Getriebeeinheit gelagert. Drehfest aber in Axialrichtung der Zwischenwelle 6 verschieblich angeordnet auf der Zwischenwelle 6 ist das Zahnrad 5. Das Zahnrad 5 ist über eine Druckplatte 15 und eine Tellerfeder 16 am Innenring 14a des Kugellagers 14 abgestützt. Auf der der Tellerfeder 16 gegenüberliegenden Seite des Zahnrads 5 ist ein Reiblamellenpaket 17 angeordnet, das sich über eine Druckplatte 17 und Kugeln 19, 20 an dem Zahnrad 7 abstützt.

In einem Grundzustand wird das Lamellenpaket 17 primär nur durch die von der Tellerfeder 16 ausgeübte "Schließkraft" zusammengepresst. Das zwischen den beiden Zahnrädern 5, 7 übertragbare Drehmoment ist somit im Grundzustand bzw. in der einen Drehmomentübertragungsrichtung primär durch die von der Tellerfeder 16 bestimmte Schließkraft bestimmt.

Wird Drehmoment in der entgegengesetzten Drehmomentübertragungsrichtung übertragen, so kommt es zu einer gewissen Relativverdrehung der beiden Zahnräder 5, 7. In das Zahnrad 7 sind rampenförmige Kugelbahnen gefräst, was zur Folge hat, dass bei einer Relativverdrehung der beiden Zahnräder 5, 7 die Druckplatte 18 gegenüber dem Zahnrad 7 geringfügig "nach links" verschoben wird, was zu einer zusätzlichen Schließkraft führt.

Im Ergebnis kann mit der in Figur 2 gezeigten drehmomentbegrenzenden Einrichtung in der einen Drehmomentrichtung ein anderes maximales Drehmoment übertragen werden als in der entgegengesetzten Drehmomentrichtung.

Geht man gedanklich zu dem in Figur 1 gezeigten Motorradantrieb zurück, so kann vorgesehen sein, dass in der "normalen Drehmomentübertragungsrichtung", d.h. wenn der Verbrennungsmotor Drehmoment über die Kupplung 3, die Zwischenwelle 6 und das Getriebe 9 auf das Hinterrad überträgt, die Schließkraft der Reiblamellenanordnung 17 durch die Federkraft der Tellerfeder 16 und durch die zusätzlich wirkende Schließkraft der Kugel-/Rampenanordnung definiert ist.

Beispielsweise kann vorgesehen sein, dass in dieser "normalen" Drehmomentübertragungsrichtung ein maximales Drehmoment von z. B. 50 Nm übertragbar ist, wohingegen in der entgegengesetzten Drehmomentübertragungsrichtung, in der die Kugel-/Rampenanordnung sich in ihren in Figur 2 gezeigten Grundzustand befindet, die drehmomentbegrenzende Einrichtung 13 aufgrund der dann geringeren Schließkraft lediglich ein Drehmoment von z. B. 15 Nm übertragen kann. Es kann vorgesehen sein, dass dies in Schubphasen der Fall ist, d.h. wenn Drehmoment vom Antriebsrad über die drehmomentbegrenzende Einrichtung 13 in den Verbrennungsmotor eingeleitet wird.

Gibt der Fahrer ausgehend vom Schubbetrieb wieder Gas, so kehrt sich die Drehmomentübertragungsrichtung um, d.h. es wird Drehmoment vom Verbrennungsmotor über die drehmomentbegrenzte Einrichtung und das Getriebe 9 auf das Antriebsrad übertragen, was dazu führt, dass sich die Kugeln 19, 20 auf ihrer jeweiligen Kurvenbahn nach außen bewegen und dabei die Druckplatte 18 "nach links" verschieben, was zu einer Erhöhung des maximal von der drehmomentbegrenzenden Einrichtung 13 übertragbaren Drehmoments führt.

Geht der Fahrer wieder vom Gas, so geht das Fahrzeug in den Schubbetrieb über und die Druckplatte 18 kehrt wieder in ihre in Figur 2 gezeigte Ausgangsstellung zurück. In dieser "umgekehrten Drehmomentübertragungsrichtung" ist das vom Hinterrad auf den Motor übertragbare Drehmoment auf einen entsprechend kleineren Wert begrenzt, was aus Gründen der Fahrsicherheit von Vorteil ist.

Es kann vorgesehen sein, dass in Umfangsrichtung der drehmomentbegrenzenden Einrichtung 13 verteilt mehrere derartige Kugel-/Rampenanordnungen vorgesehen sind. Beispielsweise können in der Druckplatte 18 sechs kugelkalottenförmige Kugelsitze vorgesehen sein, in die jeweils eine Kugel eingesetzt ist. Jeder dieser Kugeln ist eine in dem Zahnrad 7 vorgesehene, gefräste, rampenförmige Kugelbahn zugeordnet. Bei einer Verdrehung der beiden Zahnräder 5, 7 bzw. der Druckplatte 18 gegenüber dem Zahnrad 7 kommt es dementsprechend zu einer axialen Verschiebung der Druckplatte 18 in Bezug auf das Zahnrad 7.

Figur 3 zeigt die drehmomentbegrenzende Einrichtung 13 in Stirnansicht.

Die "Grundvorspannung", mit der das Reiblamellenpaket 17 vorgespannt ist, ist primär durch die Härte der Tellerfeder 16 definiert und kann zusätzlich durch den Einbau bzw. das Fortlassen von Distanzscheiben, die z.B. zwischen der Tellerfeder 16 und dem Lager 14 vorgesehen sein können (vgl. Fig. 2), variiert werden.

Alternativ dazu kann auch vorgesehen sein, dass die Grundvorspannung stufenlos, z.B. über ein Gewinde oder dergleichen verstellbar ist. Dies hat den Vorteil, dass das maximal übertragbare Drehmoment der drehmomentbegrenzenden Einrichtung je nach Betriebszustand, z.B. (Straßenfahrt/ Geländefahrt) entsprechend den Bedürfnissen des jeweiligen Fahrers eingestellt werden kann.

## Patentansprüche

1. Fahrzeug, insbesondere Motorrad, mit einem Motor und einer Kurbelwelle (2), die über eine Kupplung (3) mit einem Getriebe (9) gekoppelt ist, wobei im Drehmomentpfad zwischen der Kupplung (3) und einem Ausgang (11) des Getriebes (9) eine drehmomentbegrenzende Einrichtung (13) angeordnet ist, wobei
• die drehmomentbegrenzende Einrichtung (13) derart konzipiert ist, dass das im Schubbetrieb vom Getriebe (9) auf den Motor übertragbare maximale Schubmoment kleiner als das im Normalbetrieb vom Motor auf das Getriebe (9) übertragbare maximale Antriebsmoment ist und
• die drehmomentübertragende Einrichtung (13) ein erstes drehmomentübertragendes Element (5) und ein zweites, damit drehkoppelbares bzw. drehgekoppeltes drehmomentübertragendes Element (7) aufweist,
**dadurch gekennzeichnet, dass**
• es sich bei den drehmomentübertragenden Elementen (5, 7) um zwei koaxial angeordnete Zahnräder handelt,
• die beiden drehmomentübertragenden Elemente (5, 7) über eine Reibkupplung (18), die durch eine Spanneinrichtung (16, 19, 20) gespannt ist, miteinander drehkoppelbar bzw. drehgekoppelt sind,
• die Spanneinrichtung (16, 19, 20) eine drehrichtungs- und/oder drehmomentabhängige Spannvorrichtung (19) aufweist,
• die drehrichtungs- und/oder drehmomentabhängige Spannvorrichtung (19, 20) im Schubbetrieb maximal entspannt ist und die Reibkupplung (17) beim Übergang in den Normalbetrieb mit zunehmendem Drehmoment zunehmend zuspannt.

2. Fahrzeug nach Anspruch 1, **dadurch gekennzeichnet, dass** die drehmomentbegrenzende Einrichtung (13) eine rein mechanische Einrichtung ist.

3. Fahrzeug nach Anspruch 1 oder 2, **dadurch gekennzeichnet, dass** die Kupplung (3) auf bzw. koaxial zur Kurbelwelle (2) angeordnet ist.

4. Fahrzeug nach einem der vorangehenden Ansprüche, **dadurch gekennzeichnet, dass** die drehmomentbegrenzende Einrichtung (13) auf einer zwischen der Kupplung (3) und einer Getriebeeingangswelle (8) angeordneten Zwischenwelle (6) angeordnet ist.

5. Fahrzeug nach einem der vorangehenden Ansprüche, **dadurch gekennzeichnet, dass** die Spanneinrichtung (16, 19, 20) eine Feder, insbesondere eine Tellerfeder (16), aufweist.

6. Fahrzeug nach einem der vorangehenden Ansprüche, **dadurch gekennzeichnet, dass** die drehrichtungs- und/oder drehmomentabhängige Spannvorrichtung auf dem Prinzip einer Kugel-/Rampenanordnung basiert, mittels der durch Verdrehen der beiden drehmomentübertragenden Elemente (5, 7) eine in Längsrichtung der Zwischenwelle (6) gerichtete Spannkraft erzeugbar ist.

7. Fahrzeug nach einem der vorangehenden Ansprüche, **dadurch gekennzeichnet, dass** die drehrichtungs- und/oder drehmomentabhängige Spannvorrichtung mehrere in Umfangsrichtung der drehmomentbegrenzenden Einrichtung (13) verteilt angeordnete Kugeln (19, 20) aufweist.

8. Fahrzeug nach einem der vorangehenden Ansprüche, **dadurch gekennzeichnet, dass** die drehrichtungs- und/oder drehmomentabhängige Spannvorrichtung eine der Anzahl der vorgesehenen Kugeln (19, 20) entsprechende Anzahl rampenartig gestalteter Kugelbahnen aufweist, die in einem der beiden drehmomentübertragenden Elemente (7) oder in einer Druckplatte (18) der Reibkupplung (17) vorgesehen sind.

## Claims

1. A vehicle, especially motorcycle, with an engine and with a crankshaft (2) which is coupled with a transmission (9) via a clutch (3), wherein a torque-limiting means (13) is arranged in the torque path between the clutch (3) and an output (11) of the transmission (9), wherein
• the torque-limiting means (13) is designed in such a way that the maximum overrun torque which can be transmitted in the overrun condition from the transmission (9) to the engine is less than the maximum driving torque which can be transmitted in normal operation from the engine to the transmission (9), and
• the torque-transmitting means (13) has a first torque-transmitting element (5) and a second torque-transmitting element (7) which can be or is rotationally coupled therewith,
**characterised in that**
• the torque-transmitting elements (5, 7) are two coaxially arranged gearwheels,
• the two torque-transmitting elements (5, 7) can be or are rotationally coupled together via a friction clutch (18) which is clamped by a clamping means (16, 19, 20),
• the clamping means (16, 19, 20) has a clamping device (19) which is dependent on direction of rotation and/or torque-dependent,
• the clamping of the clamping device (19, 20) which is dependent on direction of rotation and/or torque-dependent is relieved to a maximum in the overrun condition and the friction clutch (17) is increasingly applied with increasing torque upon the transition into normal operation.

2. A vehicle according to Claim 1, **characterised in that** the torque-limiting means (13) is a purely mechanical means.

3. A vehicle according to Claim 1 or 2, **characterised in that** the clutch (3) is arranged on or coaxially to the crankshaft (2).

4. A vehicle according to one of the preceding claims, **characterised in that** the torque-limiting means (13) is arranged on an intermediate shaft (6) arranged between the clutch (3) and a gearbox input shaft (8).

5. A vehicle according to one of the preceding claims, **characterised in that** the clamping means (16, 19, 20) has a spring, especially a disc spring (16).

6. A vehicle according to one of the preceding claims, **characterised in that** the clamping device which is dependent on direction of rotation and/or torque-dependent is based on the principle of a ball-and-ramp arrangement, by means of which a clamping force directed in the longitudinal direction of the intermediate shaft (6) can be produced by turning the two torque-transmitting elements (5, 7).

7. A vehicle according to one of the preceding claims, **characterised in that** the clamping device which is dependent on direction of rotation and/or torque-dependent has a plurality of balls (19, 20) arranged distributed in the peripheral direction of the torque-limiting means (13).

8. A vehicle according to one of the preceding claims, **characterised in that** the clamping device which is dependent on direction of rotation and/or torque-dependent has a number of ramp-like ball tracks corresponding to the number of balls (19, 20) provided, which tracks are provided in one of the two torque-transmitting elements (7) or in a pressure plate (18) of the friction clutch (17).

## Revendications

1. Véhicule en particulier motocyclette équipé d'un moteur et d'un vilebrequin (2) qui est couplé à une boîte de vitesse (9) par l'intermédiaire d'un embrayage (3), un dispositif de limitation du couple (13) étant monté dans le chemin de transmission du couple entre l'embrayage (3) et la sortie (11) de la boîte de vitesses (9),
véhicule dans lequel :
- le dispositif de limitation du couple (13) est conçu de sorte que le couple de poussée maximum pouvant être transmis par la boîte de vitesses (9) au moteur en mode de poussée soit inférieur au couple d'entraînement maximum pouvant être transmis par le moteur à la boîte de vitesse (9) en mode de fonctionnement normal,
- le dispositif de transmission du couple (13) comprend un premier élément de transmission du couple (5) et un second élément de transmission du couple (7) pouvant être couplé en rotation ou couplé en rotation à celui-ci,
**caractérisé en ce que**
- les éléments de transmission du couple (5, 7) sont constitués par deux pignons montés coaxialement,
- les deux éléments de transmission du couple (5, 7) peuvent être couplés en rotation ou sont couplés en rotation par un embrayage à friction (18) qui est serré par un dispositif de serrage (16, 19, 20),
- le dispositif de serrage (16, 19, 20) comporte un moyen de serrage (19) dépendant du sens de rotation et/ou du couple,
- le moyen de serrage (19, 20) dépendant du sens de rotation et/ou du couple et desserré au maximum en mode de poussée et l'embrayage à friction (17) est de plus en plus serré lors du passage en mode de fonctionnement normal lorsque le couple augmente.

2. Véhicule conforme à la revendication 1,
**caractérisé en ce que**
le dispositif limitant le couple (13) est un dispositif totalement mécanique.

3. Véhicule conforme à la revendication 1 ou 2,
**caractérisé en ce que**
l'embrayage (3) est monté sur le vilebrequin (2) ou coaxialement à celui-ci.

4. Véhicule conforme à l'une des revendications précédentes,
**caractérisé en ce que**
le dispositif de limitation du couple (13) est monté sur un arbre intermédiaire (6) monté entre l'embrayage (3) et l'arbre d'entrée (8) de la boîte de vitesses.

5. Véhicule conforme à l'une des revendications précédentes,
**caractérisé en ce que**
le dispositif de serrage (16, 19, 20) comporte un ressort, en particulier un ressort Belleville (16).

6. Véhicule conforme à l'une des revendications précédentes,
**caractérisé en ce que**
le dispositif de serrage dépendant du sens de rotation et/ou du couple est basé sur le principe d'un dispositif à billes / rampes permettant d'obtenir, par roulement des deux éléments de transmission du couple (5, 7), une force de serrage dirigée dans la direction longitudinale de l'arbre intermédiaire (6).

7. Véhicule conforme à l'une des revendications précédentes,
**caractérisé en ce que**
le dispositif de serrage dépendant du sens de rotation et/ou du couple comprend plusieurs billes (19, 20) réparties dans la direction périphérique du dispositif de limitation du couple (13).

8. Véhicule conforme à l'une des revendications précédentes,
**caractérisé en ce que**
le dispositif de serrage dépendant du sens de rotation et/ou du couple comporte un nombre de pistes de billes réalisées sous la forme de rampes correspondant au nombre de billes prévues (19, 20) et prévues dans l'un des deux éléments de transmission du couple (7) ou dans une plaque de compression (18) de l'embrayage à friction (17).
